# EUROPEAN PATENT APPLICATION

(11) **EP 1 117 073 A1**
(43) Date of publication of application: **18.07.2001**
(21) Application number: 00945965.2
(22) Date of filing: 21.07.2000
(51) Int. Cl.: G06T 7/20

(54) **DEVICE FOR FOLLOWING INDIVIDUALLY ELEMENTS OF A SCENE AND PROCESS OF IMPLEMENTATION**

(30) Priority: 23.07.1999 ES 9901786; 21.07.2000 ES 200001819
(71) Applicant: Universitat Politecnica de Catalunya, 08034 Barcelona (ES)
(72) Inventor: ARASA MARTI, Josep, E-08034 Barcelona (ES); DOLZ GARCIA, Ramón, E-08034 Barcelona (ES); PIEDRA DE LA LLANA, Javier, E-08034 Barcelona (ES)
(74) Representative: Morgades y Manonelles, Juan Antonio
(86) International application number: ES0000265
(87) International publication number: WO0108100

(57) **Abstract**

It carries out a registration at regular intervals of time of an entire tracking area by means of transmitters located in a scene for marking of the elements and recording of the movements thereof by assigning space coordinates and time. Retransmitters are used and the appropriate times are a function of a time base. The method comprises carrying out a time average of the images used as a filter in which there is only the information which has moved and said time average of the images being updated at regular intervals of time; using the information obtained by the cameras with the visible filter to separate the different types of elements perceivable by the human eye; using the information first obtained by the cameras with infrared filter to separate the elements of each type.

## Description

The state of the art which the present invention refers to is that of the surveillance systems and object tracking. More specifically, it is provided a device and a method for the individualized tracking of elements. These elements designate, for example, a group of people, animals or objects (elements hereafter), which are correctly identified in a specific area. The invention takes into consideration the registration of the movement of the elements, the processing of said movement as well as the supply of the information obtained for its later use.

The elements to be tracked can be of any type and in any static or dynamic situation relative to a scenario. Inside this scenario it is possible to carry out the tracking of these elements and the subsequent recording of the trajectories thereof. Thereby, at the same time, later, or simultaneously, it is possible to show, display and/or broadcast said trajectories.

The current tendency of obtaining procedures directed to carry out an automatic tracking of elements has provided great advances in last years. The use of increasingly powerful digitalisation systems has provided great benefits in the tracking and recognition systems.

So far the systems can be classified in two different types: recognition systems which purpose is to recognize an element inside a scene, and tracking systems which purpose is to track a certain object inside a scene which has been previously recognized.

The invention carries out both functions, that is to say, recognition and tracking. It is thus provided a novel way to track, in a simultaneous way, a high number of different elements. There are many applications in industrial processes, security systems, sports, etc. to which the invention is intended.

Starting from the analysis of the scene which is performed at specific intervals of time, three space coordinates (x, y, z) are assigned to each element that is in this scene and that has been properly identified. These three coordinates (x, y, z) together with time (t) allows to obtain further secondary data of great interest, these being kinematics statistical data or any other type of data.

The identification is carried out by means of marks using a distinctive fabric for each element, either within the visible spectrum or not, or by using a transmitter or a retransmitter coded for each element. Both identification devices can be used separately or in a cooperative way.

With the help of the additional information related to the identification of the present elements in the scene it is possible to generate a virtual scenario in which the elements are moving according to the registrations obtained in the real scenario. The virtual scenario can be obviously changed depending upon the specifications required by the users.

The registration of the different elements is carried out by different means of reception of the electromagnetic spectrum according to the type of mark which is to be used. The elements of the scene are identified from the obtained signals. This information is transferred to a processing unit that is capable to carry out the tracking of each element with the help of the previous knowledge on the elements in the area.

One of the distinctive features of the present invention is the ability to track elements of a group in an individualized way, both if they are perceived by the human eye and if they are not, within the scene determined by the device.

In this case, the device for marking the elements can include transmitters and retransmitters located in any area of the electromagnetic spectrum for each one of the elements with the additional help, or not, of the visual identification from an expert user.

For the applications of the device according to the present invention, CCD type cameras and/or directional antennas can be used depending upon the type of mark used for identifying the element. These cameras and/or antennas remain fixed during the whole event and anyway from the obtained signals only the elements that have changed their position in some or all of the space coordinates used as a reference system (x, y, z) together with time are identified using, in this specific application, a time base.

The method of the present invention comprises the following steps:
i) Marking of the elements to be tracked.
ii) Reception of signals (electromagnetic spectrum) of each one of the coded elements, either fixed or moving, by means of originators or retransmitters.
iii) Recording or retransmission of the received signals and their processing according to a specific software application.
iv) Generation or retransmission of static and dynamic data.
v) Generation or retransmission of virtual scenarios.
vi) Generation or retransmission of further information or general representations from space and time coordinates.

With the device and the method of the present invention it is possible to identify and to track elements by synchronous registration of the whole tracking area as the device is capable to assign three space coordinates (x, y, z) and time (t) to each one of said elements generating kinetics or statistical data, or any other type of data from each one of the elements of the scene where they are.

The device is insensitive to the presence of undesirable, and therefore not marked, elements in the working area. The device allows generating a virtual scenario in which the elements are moving according to the registrations obtained from the real scenario. Optionally, it is possible to change this virtual scenario depending upon the specifications required by the users.

One of the possible applications of the device and the procedure of the invention is the tracking of a soccer game, in which the elements are the players. Once the players have been singly identified, their movements and their trajectory are tracked and recorded into a memory. With the help of an appropriate application software, the obtained data is displayed as statistics corresponding to the times the player has played the ball, the fouls made by each player, the cards shown by the referee, off sides, and others.

All the above-mentioned can be extended to any type of sport event by simply changing the application software representing in its contents the specific game rules related to the sports and other elements (balls, goals etc). The information can be recorded in a CD-ROM, sent via internet, and displayed in a computer screen by appropriate means.

Further details and features of the present patent application will be apparent from the following description, which refers to the accompanying drawings that schematically represent the preferred details. These details are given by way of example, which refer to a possible case of practical embodiment, but it is not limited to the details disclosed herein; therefore this description must be considered from a illustrating point of view and without any type of limitations.

Figure n° 1 is a schematic view showing two CCD cameras, one of them provided with a visible filter and the other having an infrared filter.

Figure n° 2 is a general schematic view that illustrates the analysis in visible spectrum by means of a group of cameras (1), elements (2) of two types (a) and (b) perceivable by the human eye and elements (3) perceivable by the infrared.

Figure n° 3 is a diagram depiction of the path of the different elements.

And figure n° 4 is a general schematic view of the analysis area in infrared spectrum by means of a group of cameras (1), elements (2) of two types (a) and (b) perceivable by the human eye and perceivable within each type only for the infrared spectrum, as well as identification of elements (3) in the scene, for the human eye and for the visible spectrum.

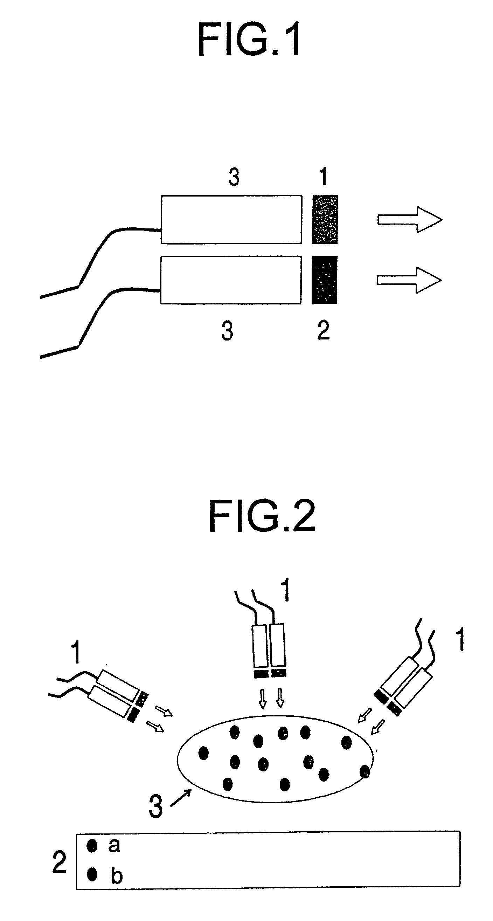

According to a preferred embodiment of the present invention and as it can be seen from figure n° 1, two groups of CCD cameras are used each having two filters. One of the filters only allows passing the visible components of the spectrum and the other filter the infrared ones. The identification of the elements by marking is carried out by means of infrared signals.

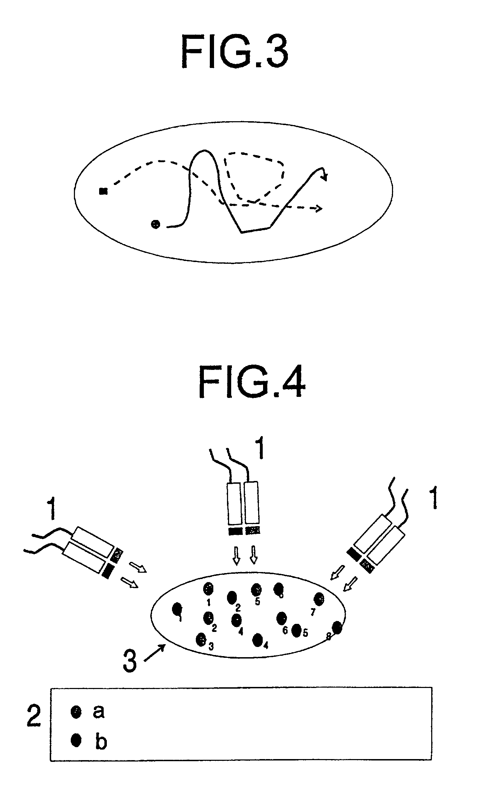

Each one of the two cameras see the same area under different perspectives as shown in figures n° 2 and 3. The information provided by these two groups of cameras is processed in the following way:

First, a time average of the images is carried out for not less than one minute. These average images are updated at regular intervals of time and they are used as a filter to subtract the successive images and thus to obtain a registration in which there is only the information that has moved.

The information obtained by the cameras provided with the visible filter is then used to separate the different types of elements (a) and (b). These types are perceivable by the human eye, see figure n° 2.

Finally, the information first obtained by the cameras having the infrared filter is used to separate the different elements of each type, see figure n° 3. A double classification is thus obtained: in the visible spectrum, types (a) and (b), and in the infrared spectrum (numeration within each type).

The information provided both by the cameras having a visible filter and the cameras having a infrared filter (1) and the expert user's visual support if necessary according to the method of the present invention, is combined in such a way that, by means of triangulation between the two groups of cameras, see figures n° 2 and 3, the coordinates (x, y, z) are obtained at intervals determined by the specific time base of each application.

The information supplied by the above method is used to provide a graph of the path of each element, see figure n° 4, for the time that the device of the present invention is being used. The path is a function of the selected time base.

Once having been sufficiently described what the present patent application consists in accordance to the enclosed drawings, it is understood that any detail modification can be introduced as appropriate, provided that variations may alter the essence of the invention as summarised in the appended claims.

## Claims

1. "DEVICE FOR THE INDIVIDUALIZED TRACKING OF ELEMENTS IN A SCENE" for carry out a registration at regular intervals of time of an entire tracking area by means of a group of transmitters located in a scene for marking of the elements and recording of the movements thereof by means of assigning space coordinates (x, y, z) and time (t), characterized in that it is further provided with retransmitters for carry out said registration of the tracking area and the appropriate times being a function of a time base.

2. "METHOD TO OUT A INDIVIDUALIZED TRACKING OF ELEMENTS IN A SCENE", characterized in that it comprises the steps of:
Carrying out a time average of the images for not less than one minute, said average images being used as a filter in which there is only the information which has moved and said time average of the images being updated at regular intervals of time;
using the information obtained by the cameras provided with the visible filter to separate the different types of elements (a) and (b) which are perceivable by the human eye;
using the information first obtained by the cameras having the infrared filter to separate the different elements of each type obtaining a double classification: in the visible spectrum corresponding to types (a) and (b), and in the infrared spectrum (numeration within each type).

3. "METHOD TO CARRY OUT A INDIVIDUALIZED TRACKING OF ELEMENTS IN A SCENE" according to claim 2, characterized in that the identification of the elements are performed by infrared marks and marks of any other electromagnetic spectrum area, including the visual support of an expert user.

4. "METHOD TO CARRY OUT A INDIVIDUALIZED TRACKING OF ELEMENTS IN A SCENE" according to claim 2, characterized in that the generated information, identified and assigned from space and time coordinates are transmitted, for any transmission means, from the working area to the virtual scenario located anywhere in the world.
